(19) Europäisches Patentamt
European Patent Office
Office européen des brevets

(11) EP 4 737 399 A1

(12) EUROPEAN PATENT APPLICATION

(43) Date of publication:
06.05.2026 Bulletin 2026/19

(51) International Patent Classification (IPC):
C01G 53/50 (2025.01)

(21) Application number: 25210463.3

(22) Date of filing: 22.10.2025

(52) Cooperative Patent Classification (CPC):
C01G 53/50; C01P 2002/52; C01P 2004/03;
C01P 2006/40; C01P 2006/80

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 23.10.2024 KR 20240145994

(71) Applicant: ECOPRO BM CO., LTD.
Cheongju-si, Chungcheongbuk-do 28117 (KR)

(72) Inventors:
• SHIN, Jaehoon
28116 Cheongju-si (KR)
• BAE, Jin Ho
28116 Cheongju-si (KR)
• CHOI, JinHyeok
28116 Cheongju-si (KR)
• KIM, JinKyu
28116 Cheongju-si (KR)
• SHIN, Sehee
28116 Cheongju-si (KR)

(74) Representative: J A Kemp LLP
80 Turnmill Street
London EC1M 5QU (GB)

(54) **BORON, SULPHUR COATED POSITIVE ELECTRODE ACTIVE MATERIAL FOR SECONDARY BATTERY**

(57) A positive electrode active material particle according to one aspect of the present invention comprises sulfur (S) and boron (B), and when a ratio of a sulfur (S) concentration (ppm) to a boron (B) concentration (ppm) is denoted as S/B, it may be that 8≤S/B≤20.

FIG. 1

Comparative Example 1 | Comparative Example 2 | Comparative Example 3 | Example 2
Example 1 | Example 3 | Comparative Example 4 | Comparative Example 5

## Description

### Technical Field

The present invention relates to positive electrode active material particles and a positive electrode active material for a secondary battery comprising the same, and more particularly, to positive electrode active material particles that are mixed-coated with sulfur (S) and boron (B), and in which the coating content, coating conditions, and manufacturing method are controlled, and a positive electrode active material for a secondary battery comprising the same.

### Background

With the development of portable mobile electronic devices such as smartphones, MP3 players, and tablet PCs, the demand for secondary batteries capable of storing electrical energy has been explosively increasing.

In particular, with the emergence of electric vehicles, medium-to-large energy storage systems, and portable devices requiring high energy density, the demand for lithium secondary batteries is on the rise.

As a lithium composite oxide included in the positive electrode active material, the material currently receiving the most attention is the lithium nickel manganese cobalt oxide $Li(Ni_xCo_yMn_z)O_2$ (where x, y, and z are the atomic fractions of the respective independent oxide composition elements, with $0<x\leq1$, $0<y\leq1$, $0<z\leq1$, and $0<x+y+z\leq1$).

This positive electrode active material has the advantage of delivering high capacity because it is used at a higher voltage than $LiCoO_2$, which has been actively researched and used as a positive electrode active material, and it has the advantage of being low-cost due to its relatively low Co content.

However, such lithium composite oxides undergo volume changes accompanying the intercalation and deintercalation of lithium ions during charging and discharging.

Problems arise where the primary particles of the lithium composite oxide undergo rapid volume changes during charging and discharging, cracks occur in the secondary particles due to repeated charging and discharging, or the crystal structure collapses or undergoes a phase transition.

To compensate for these shortcomings, the demand for high-nickel positive electrode active materials, in which the nickel (Ni) content is high among the total metal content excluding lithium (Li), has begun to increase as a positive electrode active material for secondary batteries.

### Technical Problem

Due to the high Li/M ratio during the manufacturing of the positive electrode active material, the amount of residual lithium remaining in the positive electrode active material after firing is high, which causes a gelation phenomenon during the preparation of the electrode slurry, leading to difficulties in cell manufacturing.

Furthermore, although a washing process is introduced to remove the residual lithium present in the positive electrode active material during its manufacturing, there is a problem that the battery characteristics are degraded due to damage to the surface of the positive electrode active material particles during the washing process.

Additionally, there is a problem that particle crystallinity is hindered and strain is induced by a stacking fault phenomenon caused by sulfur compounds, which are impurities existing inside the precursor particles originating from the positive electrode active material precursor particles.

In particular, in high-nickel positive electrode active materials, the higher content of residual lithium present in the particles becomes more problematic, and the stability is reduced due to the high Ni content, resulting in a disadvantage of further decreased output.

To solve the above problems, the present invention aims to manufacture a positive electrode active material that can improve both output and capacity characteristics by adopting a non-washing process during the manufacturing of the positive electrode active material to reduce surface damage to the positive electrode while significantly reducing residual lithium, through mixed coating with sulfur (S) and boron (B) and controlling the coating content, coating conditions, and manufacturing method.

Furthermore, the present invention aims to manufacture a positive electrode active material that can significantly reduce the stacking fault phenomenon and strain and increase particle crystallinity by performing the mixing and coating of sulfur (S) and boron (B) through a semi-wet spray process, optimizing the mixing content ratio, and thereby causing internal impurities such as sulfur compounds that induce the stacking fault phenomenon to migrate to the surface of the positive electrode active material particles.

Furthermore, the present invention aims to manufacture a positive electrode active material in which capacity, efficiency, and output characteristics are all improved compared to when sulfur (S) and boron (B) are used individually, by performing the mixing and coating of sulfur (S) and boron (B) through a semi-wet spray process in a non-washing process and optimizing the mixing content ratio.

**Technical Solution**

A positive electrode active material particle according to one aspect of the present invention comprises sulfur (S) and boron (B), and when the ratio of the sulfur (S) concentration (ppm) to the boron (B) concentration (ppm) included in the positive electrode active material particle is denoted as S/B, it may be that $8 \leq S/B \leq 20$.

More preferably, the positive electrode active material particle comprises sulfur (S) and boron (B), and when the ratio of the sulfur (S) concentration (ppm) to the boron (B) concentration (ppm) included in the positive electrode active material particle is denoted as S/B, it may be that $10 \leq S/B \leq 15$.

More preferably, the boron (B) concentration (ppm) included in the positive electrode active material particle may be from 100 ppm to 600 ppm.

More preferably, the sulfur (S) concentration (ppm) included in the positive electrode active material particle may be from 3,200 ppm to 5,000 ppm.

More preferably, the positive electrode active material particle comprises a bulk region and a coating region, the coating region comprises sulfur (S) and boron (B), and the sulfur (S) and boron (B) included in the coating region may be present on a part of the surface of the bulk region.

More preferably, the sulfur (S) concentration (ppm) included in the coating region may be greater than the sulfur (S) concentration (ppm) included in the positive electrode active material particle.

More preferably, the positive electrode active material particle may comprise $Li_3BO_3$.

More preferably, the positive electrode active material particle may comprise $Li_2SO_4$.

More preferably, the positive electrode active material may further comprise a coating oxide comprising one or more selected from cobalt (Co), aluminum (Al), titanium (Ti), zirconium (Zr), magnesium (Mg), zinc (Zn), molybdenum (Mo), iron (Fe), nickel (Ni), barium (Ba), tungsten (W), yttrium (Y), niobium (Nb), and fluorine (F).

More preferably, the positive electrode active material particle may have a specific surface area of 0.42 $m^2$/g to 0.5 $m^2$/g as measured by the nitrogen adsorption BET method.

A method for manufacturing a positive electrode active material particle may comprise: a step of mixing and heat-treating a positive electrode active material precursor and a lithium-containing compound to prepare a lithium composite oxide; a step of preparing a coating solution comprising a sulfur (S)-containing compound and a boron (B)-containing compound; and a step of spraying the prepared coating solution onto the prepared lithium composite oxide and heat-treating it.

More preferably, when the ratio of the sulfur (S) concentration (ppm) to the boron (B) concentration (ppm) included in the coating solution is denoted as '$S_{input}/B_{input}$', it may be that $1.4 \leq S_{input}/B_{input} \leq 5.0$.

More preferably, the heat treatment temperature in the step of spraying the prepared coating solution onto the prepared lithium composite oxide and heat-treating it may be from 250°C to 350°C.

More preferably, the method may further comprise a step of coating the prepared lithium composite oxide with cobalt (Co) after the step of preparing the lithium composite oxide and before the step of spraying the prepared coating solution onto the prepared lithium composite oxide and heat-treating it.

A positive electrode active material according to one aspect of the present invention may comprise the positive electrode active material particles.

**Advantageous Effects**

As one effect, the present invention provides a positive electrode active material that improves capacity, efficiency, and output characteristics by reducing the residual lithium present in the positive electrode active material particles.

As one effect, the present invention provides a positive electrode active material that can significantly reduce the stacking fault phenomenon and strain and increase particle crystallinity by causing internal impurities, such as sulfur compounds originating from the precursor that induce the stacking fault phenomenon, to migrate to the surface of the positive electrode active material particles.

As one effect, the present invention provides a positive electrode active material in which all three performances of capacity, efficiency, and output are improved.

**Brief Description of the Drawings**

FIG. 1 is an SEM image of the surface of particles according to an Example and a Comparative Example of the present invention.

FIG. 2 is a cross-sectional SEM-EDS image of a particle according to the manufacturing method of the present invention.
FIG. 3 is a surface SEM-EDS image of a particle according to the manufacturing method of the present invention.
FIG. 4 is a cross-sectional SEM-EDS image of a particle according to Example 1 of the present invention.

## Detailed Description

Expressions such as "comprising" used in this specification should be understood as open-ended terms that imply the possibility of including other components.

"Preferred" and "preferably" as used in this specification refer to embodiments of the present invention that may provide certain advantages under certain circumstances. However, they are not intended to exclude other embodiments from the scope of the present invention.

Furthermore, the singular forms used in the specification and the appended claims are intended to include the plural forms as well, unless the context clearly indicates otherwise. That is, a technical feature described for a single particle may mean a technical feature for a plurality of particles, and may be intended to mean an average technical feature for a plurality of particles.

Numerical ranges used in this specification include the lower limit, the upper limit, all values within that range, increments logically derived from the form and width of the defined range, all dually limited values, and all possible combinations of the upper and lower limits of numerical ranges defined in different forms.

Unless otherwise specified in this specification, values outside the numerical range that may occur due to experimental error or rounding of values are also included in the defined numerical range.

A "layer" includes not only a shape formed on the entire surface when observed in a plan view but also a shape formed on a part of the surface.

The meanings of '$\leq$', 'or more', or 'or less' described in this specification may be replaced with the meanings of '<', 'exceeding', or 'less than'.

Meanwhile, the technical features described below relate to one aspect for achieving the intended effects of the present invention as described above.

That is, a positive electrode active material according to one aspect of the present invention can reduce the residual lithium in the particles, remove internal sulfur impurities originating from the precursor to increase crystallinity, and improve the capacity, efficiency, and output characteristics of a secondary battery by including the technical features according to one aspect described below.

The present invention relates to positive electrode active material particles for a secondary battery and a positive electrode active material comprising a plurality of these particles.

The secondary battery of the present invention is not limited in its type as long as it is a battery that can store external electrical energy in the form of chemical energy and make it reusable.

As an example, the present invention may relate to a positive electrode active material for a lithium-ion secondary battery.

To improve battery characteristics, the present invention can perform a mixed coating of sulfur (S) and boron (B) and control the coating content, coating conditions, and manufacturing method.

More specifically, the present invention can control the mixing ratio during the mixed coating of sulfur (S) and boron (B), and control the mixed content of the bulk region and the coating region.

Furthermore, during the mixed coating of sulfur (S) and boron (B), the present invention can perform a semi-wet spray process of spraying a sulfate aqueous solution of a sulfur (S)-containing compound and a boron (B)-containing compound onto the particle surface.

The semi-wet spray process refers to a process of preparing a coating solution and spraying it onto the particle surface.

Furthermore, during the mixed coating of sulfur (S) and boron (B), the present invention can control the heat treatment temperature in the semi-wet spray process of spraying a sulfate aqueous solution of a sulfur (S)-containing compound and a boron (B)-containing compound onto a fired product.

Furthermore, the present invention can control the doping elements and additional coating elements, and control the doping and coating sequence and conditions.

Furthermore, the present invention can be performed by a non-washing process.

First, the positive electrode active material particles and the positive electrode active material of the present invention will be described.

A positive electrode active material particle according to one aspect of the present invention may comprise sulfur (S) and boron (B).

The inventors have confirmed that when a coating material is formed by mixing and coating sulfur (S) and boron (B) together on positive electrode active material particles, all three performances of capacity, efficiency, and output of a secondary battery can be improved compared to when sulfur (S) and boron (B) are used individually.

More preferably, when the ratio of the sulfur (S) concentration (ppm) to the boron (B) concentration (ppm) included in the positive electrode active material particle is denoted as S/B, S/B may be 8 or more, 9 or more, 10 or more, 11 or more, 12 or more, 13 or more, 14 or more, and 20 or less, 18 or less, 15 or less, 14 or less, 13 or less, 12 or less, or 11 or less.

When sulfur (S) and boron (B) are mixed-coated, not only capacity and efficiency but also output characteristics can be improved within the numerical range of the said concentration ratio of the positive electrode active material particles.

More preferably, the boron (B) concentration (ppm) included in the positive electrode active material particle may be 100 ppm or more, 150 ppm or more, 200 ppm or more, 250 ppm or more, 300 ppm or more, and 600 ppm or less, 550 ppm or less, 500 ppm or less, 450 ppm or less, 400 ppm or less, or 350 ppm or less.

When sulfur (S) and boron (B) are mixed-coated, not only capacity characteristics but also output characteristics can be improved within the numerical range related to the said boron (B) concentration of the positive electrode active material particles.

More preferably, the sulfur (S) concentration (ppm) included in the positive electrode active material particle may be 3,200 ppm or more, 3,500 ppm or more, 4,000 ppm or more, and 5,000 ppm or less, or 4,500 ppm or less.

When sulfur (S) and boron (B) are mixed-coated, not only capacity characteristics but also output characteristics can be improved within the numerical range related to the said sulfur (S) concentration in the positive electrode active material particles.

More preferably, the positive electrode active material particle may comprise a bulk region and a coating region.

More preferably, the bulk region may be a lithium composite oxide.

More preferably, the bulk region may be a lithium composite oxide comprising nickel (Ni).

More preferably, the lithium composite oxide may be represented by the following Chemical Formula 1.

[Chemical Formula 1]     $Li_aNi_xM1_\gamma M2_{1-x-\gamma}O_2$

In Chemical Formula 1, M1 is selected from the group consisting of cobalt (Co), manganese (Mn), aluminum (Al), and combinations thereof, M2 is selected from the group consisting of Zr, Mn, Al, B, S, Ba, Ce, Cr, F, Mg, V, Ti, Fe, Zn, Si, Y, Nb, Ga, Sn, Mo, W, P, Sr, Na, K, Hf, Ta, Cu, and combinations thereof, and $0.9 \leq a \leq 1.2$, $0.1 \leq x < 1.0$, $0.0 \leq y \leq 0.5$, and $0.0 \leq 1-x-y-z \leq 0.5$.

More preferably, in Chemical Formula 1, 'a', which means the mole % of lithium (Li) relative to the total mole % of transition metals excluding lithium (Li), may be 0.9 or more, 1.0 or more, and 1.2 or less, 1.1 or less, or 1.05 or less.

More preferably, in Chemical Formula 1, 'x', which means the mole % of nickel (Ni) relative to the total mole % of transition metals excluding lithium (Li), may be 0.1 or more, 0.2 or more, 0.3 or more, 0.4 or more, 0.5 or more, 0.6 or more, 0.7 or more, 0.8 or more, or 0.9 or more, and in particular, the present invention may be a high-nickel (high-Ni) oxide.

While such high-nickel positive electrode active materials have the advantage of high energy density, they have a problem of rapid deterioration in cycle life characteristics at room and high temperatures due to increased structural instability from Li/Ni cation mixing, physical disconnection of internal particles due to microcracks, and aggravation of electrolyte depletion as the Ni content increases.

Furthermore, due to the high Li/M ratio during the manufacturing of the positive electrode active material, the amount of residual lithium remaining in the positive electrode active material after firing is high, which causes a gelation phenomenon during the preparation of the electrode slurry, leading to difficulties in cell manufacturing.

The present invention can solve this problem, which is more severe in high-nickel (high-Ni) positive electrode active materials, by performing a mixed coating of sulfur (S) and boron (B) and controlling the coating content, coating conditions, and manufacturing method.

More preferably, in Chemical Formula 1, when 'y' means the mole % of cobalt (Co) relative to the total mole % of transition metals excluding lithium (Li), y may be 0.5 or less, 0.4 or less, 0.3 or less, 0.2 or less, 0.1 or less, 0.08 or less, or 0.06 or less.

In particular, the present invention may be a low-cobalt (Low-Co) oxide.

As the demand for batteries rapidly increases, the price of cobalt (Co) is rising, which can cause instability in the supply of cobalt (Co). Therefore, it is required to reduce the content of cobalt (Co) to secure price stability and resource stability of the positive electrode active material. However, lowering the content of cobalt (Co) leads to problems such as deterioration of energy density, low-temperature characteristics, and rate characteristics.

The present invention can solve this problem, which is more pronounced in low-cobalt (Low-Co) positive electrode active materials, by performing a mixed coating of sulfur (S) and boron (B) and controlling the coating content, coating conditions, and manufacturing method.

More preferably, in Chemical Formula 1, when 'y' means the mole % of Al and/or Mn relative to the total mole % of transition metals excluding lithium (Li), y may be 0.5 or less, 0.4 or less, 0.3 or less, 0.2 or less, 0.1 or less, 0.1 or more, 0.2 or more, or 0.3 or more.

More preferably, the coating region may be a region distinct from the lithium composite oxide particles that constitute the bulk region.

Meanwhile, when the lithium composite oxide particles according to one aspect of the present invention are subjected to a coating treatment, a part of the coating elements may exist within the lattice structure of the primary particles included in the lithium composite oxide particles.

This is expressed as the lithium composite oxide particles being doped, and the lithium composite oxide particles related to the bulk region are defined to include all such doped regions.

In another aspect, when the lithium composite oxide particles according to one aspect of the present invention are subjected to a coating treatment, a part of the coating elements may form a coating region where a coating material exists.

This coating material may exist on the surface of the secondary particles of the lithium composite oxide particles and/or at the grain boundaries between the primary particles of the lithium composite oxide.

Here, the grain boundaries between the primary particles refer to a region including both the space between the primary particles and the surface of the primary particles.

More preferably, the coating region may comprise sulfur (S) and boron (B).

The sulfur (S) and boron (B) included in the coating region may be present on a part of the surface of the bulk region.

That is, unlike a wet process where the active material particles are immersed in a coating solution, the sulfur (S) and boron (B) included in the coating region may not cover the entire surface of the bulk region.

Meanwhile, the coating region may be formed on the surface of the bulk region, and may also be formed at the grain boundaries between the primary particles existing in the surface portion of the bulk region.

Here, the surface portion refers to the part where the coating region, formed by the coating material seeping through the spaces between the primary particles, exists.

Meanwhile, More preferably, the area ratio of the region where sulfur (S) and boron (B) included in the coating region exist on the surface of the bulk region may be 10% or more, 20% or more, 30% or more, 40% or more, 50% or more, 60% or more, 70% or more, and 90% or less, 80% or less, 70% or less, 60% or less, 50% or less, 40% or less, 30% or less, or 20% or less.

More preferably, the thickness of the coating region formed on the surface of the bulk region may be 1 nm or more, 10 nm or more, and 1 $\mu$m or less, 500 nm or less, 300 nm or less, or 100 nm or less.

More preferably, the sulfur (S) concentration (ppm) included in the coating region may be greater than the sulfur (S) concentration (ppm) included in the positive electrode active material particle.

That is, the weight % of sulfur (S) included in the coating region relative to the total weight % of the coating region may be greater than the weight % of sulfur (S) included in the positive electrode active material particle relative to the total weight % of the positive electrode active material particle.

In this case, the input sulfur (S) exists more on the particle surface than inside the particle according to the manufacturing method of the present invention, and the sulfur (S) impurities that existed in the precursor particles also migrate to the particle surface, so the sulfur (S) concentration (ppm) included in the coating region may be greater than the sulfur (S) concentration (ppm) included in the positive electrode active material particle.

More preferably, the sulfur (S) concentration (ppm) included in the coating region may be greater than the sulfur (S) concentration (ppm) included in the bulk region.

More preferably, the boron (B) concentration (ppm) included in the coating region may be greater than the boron (B) concentration (ppm) included in the positive electrode active material particle.

That is, the weight % of boron (B) included in the coating region based on the total weight % of the coating region may be greater than the weight % of boron (B) included in the positive electrode active material particle based on the total weight % of the positive electrode active material particle.

In this case, the input boron (B) exists more on the particle surface than inside the particle according to the manufacturing method of the present invention.

More preferably, the boron (B) concentration (ppm) included in the coating region may be greater than the boron (B) concentration (ppm) included in the bulk region.

More preferably, 90% or more, or 100% of the boron (B) input during the coating of the positive electrode active material particle may exist in the coating region.

More preferably, boron (B) may not exist in the bulk region, and boron (B) may exist only in the coating region.

The positive electrode active material particle may comprise $Li_2BO_3$.

The present invention proceeds with a non-washing process to reduce damage to the surface of the positive electrode active material particles, while converting residual lithium-containing compounds such as LiOH and $Li_2CO_3$ into coating materials such as $Li_2BO_3$, thereby further reducing residual lithium.

More preferably, the $Li_2BO_3$ may be a coating material and may be present on a part of the surface of the bulk region.

Furthermore, the $Li_2BO_3$ may also be formed at the grain boundaries between the primary particles existing in the surface portion of the bulk region.

More preferably, the $Li_2BO_3$ concentration (ppm) included in the positive electrode active material particle may be 100 ppm or more, 300 ppm or more, 500 ppm or more, 700 ppm or more, 1,000 ppm or more, and 3,500 ppm or less, 3,000 ppm or less, 2,500 ppm or less, 2,000 ppm or less, 1,500 ppm or less, or 1,000 ppm or less.

Meanwhile, in the present invention, the input boron (B) may exist in an amorphous glassy state in addition to the said $Li_2BO_3$.

Meanwhile, More preferably, when coating with boron (B), the present invention controls the heat treatment temperature more preferably within 280°C to 320°C, so that boron (B) is not doped into the particle lattice structure but exists as a coating material on the surface or in the surface portion of the bulk region.

More preferably, the positive electrode active material particle may comprise $Li_2SO_4$.

The present invention proceeds with a non-washing process to reduce damage to the surface of the positive electrode active material particles, while converting residual lithium-containing compounds such as LiOH and $Li_2CO_3$ into coating materials such as $Li_2SO_4$, thereby further reducing residual lithium.

More preferably, the $Li_2SO_4$ concentration (ppm) included in the positive electrode active material particle may be 2,000 ppm or more, 3,000 ppm or more, 4,000 ppm or more, 5,000 ppm or more, 6,000 ppm or more, 7,000 ppm or more, 8,000 ppm or more, 10,000 ppm or more, and 16,000 ppm or less, 14,000 ppm or less, 12,000 ppm or less, 10,000 ppm or less, 8,000 ppm or less, 6,000 ppm or less, or 4,000 ppm or less.

More preferably, the said $Li_2SO_4$ concentration (ppm) may not only be due to the sulfur (S) input for coating, but may also be a concentration (ppm) that includes the case where impurities containing sulfur (S) that existed in the precursor particles migrate to the particle surface and form $Li_2SO_4$.

More preferably, the said $Li_2SO_4$ may be a coating material and may exist on a part of the surface of the bulk region and at the grain boundaries between the primary particles existing in the surface portion of the bulk region.

Meanwhile, More preferably, when coating with sulfur (S), the present invention controls the heat treatment temperature more preferably within 280°C to 320°C, so that sulfur (S) is not doped into the particle lattice structure but exists as a coating material on the surface or in the surface portion of the bulk region.

Furthermore, to further improve battery characteristics, the present invention may perform the mixed coating of sulfur (S) and boron (B) in a third heat treatment process, and control the doping and coating elements and content, and heat treatment conditions in a first heat treatment and a second heat treatment.

More specifically, doping elements can be mixed with precursor particles and doped through a first heat treatment.

For example, the doping element may be a substance selected from the group consisting of Zr, Mn, Al, B, S, Ba, Ce, Cr, F, Mg, V, Ti, Fe, Zn, Si, Y, Nb, Ga, Sn, Mo, W, P, Sr, Na, K, Hf, Ta, Cu, and combinations thereof.

Most preferably, aluminum (Al) can be used as the doping element during the first heat treatment.

More preferably, the mole % of aluminum (Al) present in the positive electrode active material of the present invention may be from 0.7 mol% to 1.4 mol%.

By doping with aluminum (Al) before the mixed coating of sulfur (S) and boron (B), the present invention can further improve the cycle life of the secondary battery.

More preferably, the positive electrode active material may further comprise a coating oxide comprising one or more selected from cobalt (Co), aluminum (Al), titanium (Ti), zirconium (Zr), magnesium (Mg), zinc (Zn), molybdenum (Mo), iron (Fe), nickel (Ni), barium (Ba), tungsten (W), yttrium (Y), niobium (Nb), and fluorine (F) as a coating material.

Most preferably, by coating with cobalt (Co) before the mixed coating of sulfur (S) and boron (B), the cycle life of the secondary battery can be further improved.

As an example, the cobalt (Co) oxide may be included in the form of $Li_pCo_qO_r$, $Co_qO_r$, and/or an LCO-like structure.

Meanwhile, the LCO-like structure is an intermediate that can exist in the process of forming $LiCoO_2$ cobalt (Co) oxide, and for example, it may be amorphous or have a spinel structure.

Meanwhile, Most preferably, a dry coating may be performed when coating with cobalt (Co).

In this case, a part of the cobalt (Co) in the coating precursor may be doped into the lattice structure of the primary particles, and a part may exist in the form of an oxide containing cobalt (Co) on the particle surface and at the grain boundaries between the primary particles.

More preferably, the coating region of the present invention may comprise a coating oxide represented by the following Chemical Formula 2.

$$[\text{Chemical Formula 2}] \qquad Li_pM3_qO_r$$

In Chemical Formula 2, M3 is one or more selected from cobalt (Co), sulfur (S), and boron (B), and $0 \leq p \leq 10$, $0 < q \leq 8$, $2 \leq r \leq 13$.

As an example, the coating oxide may be a composite oxide of lithium and the element represented by M3, or an oxide of M3.

As an example, M3 may comprise sulfur (S) and boron (B), or may comprise all of cobalt (Co), sulfur (S), and boron (B).

More preferably, the positive electrode active material particle may have a specific surface area of 0.42 $m^2/g$ or more and 0.5 $m^2/g$ or less as measured by the nitrogen adsorption BET method.

The positive electrode active material particles according to the manufacturing method of the present invention have a specific surface area within the said numerical range, so that capacity and cycle life performance can be further improved.

More preferably, the lithium composite oxide particles related to the bulk region may be secondary particles formed by the agglomeration of primary particles.

For example, the secondary particles may consist of 2 to 10, 10 to 100, 100 to 1000, 1000 to 10000, or 10000 or more primary particles.

The primary particles and the secondary particles may each independently have a rod shape, an elliptical shape, and/or an irregular shape.

More preferably, the average major axis length of the primary particles may be 0.1 $\mu m$ or more, 0.5 $\mu m$ or more, 1 $\mu m$ or more, and 10 $\mu m$ or less, 5 $\mu m$ or less, or 3 $\mu m$ or less.

More preferably, the average aspect ratio (major axis length/minor axis length) of the primary particles may be 1.0 or more, 1.2 or more, 1.5 or more, 2.0 or more, and 10.0 or less, 7.0 or less, or 5.0 or less.

More preferably, the secondary particles may be spherical, and the average diameter (D50) may be 1 $\mu m$ or more, 5 $\mu m$ or more, 10 $\mu m$ or more, and 30 $\mu m$ or less, 20 $\mu m$ or less, or 15 $\mu m$ or less.

In the present invention, the average diameter (D50) is the particle diameter at the 50% point of the cumulative area distribution according to particle size, and this can be measured using a laser diffraction method.

Specifically, after dispersing the powder to be measured in a dispersion medium, it is introduced into a commercially available laser diffraction particle size analyzer, and the particle size distribution can be calculated by measuring the difference in diffraction patterns according to the particle size as the particles pass through a laser beam.

More preferably, the nickel (Ni)-based lithium composite oxide particles may be single particles, and when the single particle consists of one crystallite, it may be in a single crystal form, and the average diameter (D50) of the single particle may be from 0.1 $\mu m$ to 30 $\mu m$.

Meanwhile, the single particles may also exist in contact with each other.

Next, a method for manufacturing the positive electrode active material particles and the positive electrode active material of the present invention will be described.

By the manufacturing method described below, the coating content, coating conditions, and manufacturing method of the positive electrode active material particles of the present invention can be controlled.

First, as a positive electrode active material precursor, a hydroxide precursor or an oxide precursor can be prepared.

Next, the prepared precursor and a lithium-containing compound can be mixed and subjected to a first heat treatment to prepare a lithium composite oxide.

Furthermore, more preferably, a doping element-containing compound can be mixed and subjected to the first heat treatment together, and as an example, the doping element may be aluminum (Al).

Furthermore, more preferably, the first heat treatment temperature may be from 740°C to 780°C.

Next, if an additional coating other than sulfur (S) and boron (B) is to be performed, the lithium composite oxide from the first heat treatment can be mixed with a first coating element-containing compound and subjected to a second heat treatment to prepare a first-coated lithium composite oxide.

At this time, more preferably, the first coating element may be cobalt (Co).

Furthermore, more preferably, the cobalt (Co)-containing compound is a solid, and the process can be performed by a dry coating process.

Furthermore, more preferably, the second heat treatment temperature may be from 680°C to 720°C.

A coating solution comprising a sulfur (S)-containing compound and a boron (B)-containing compound can be prepared as follows.

First, a sulfur (S)-containing compound and a boron (B)-containing compound are weighed and added to a solvent to prepare a coating solution.

Next, the prepared coating solution is sprayed onto the prepared lithium composite oxide (lithium composite oxide or first-coated lithium composite oxide) by a spray method, and then a third heat treatment is performed to prepare the positive electrode active material.

At this time, as an example, the sulfur (S)-containing compound may be a sulfate compound, and the boron (B)-containing compound may be $H_3BO_3$.

At this time, when the ratio of the input sulfur (S) weight % (relative to particles) to the boron (B) weight % (relative to particles) is denoted as '$S_{input}/B_{input}$', '$S_{input}/B_{input}$' may be 1.4 or more, 1.5 or more, 2.0 or more, 2.5 or more, and 5.0 or less, 4.5 or less, 4.0 or less, 3.5 or less, or 3.0 or less.

In particular, when $2.0 \leq S_{input}/B_{input} \leq 4.0$ is satisfied, the initial charge-discharge capacity performance can be maximized.

When manufacturing the positive electrode active material particles of the present invention, the input sulfur (S) concentration (ppm) may be from 500 ppm to 2000 ppm, from 800 ppm to 1600 ppm, and more preferably from 1000 ppm to 1400 ppm, relative to the mixed positive electrode active material.

When manufacturing the positive electrode active material particles of the present invention, the input boron (B) concentration (ppm) may be from 100 ppm to 600 ppm, from 300 ppm to 500 ppm, and more preferably from 400 ppm to 450 ppm, relative to the mixed positive electrode active material.

Furthermore, More preferably, the third heat treatment temperature may be from 250°C to 350°C, and more preferably, from 280°C to 320°C.

By thus performing a mixed coating of sulfur (S) and boron (B) and controlling the coating content, coating conditions, and manufacturing method, the present invention can, compared to dry or wet coating, cause internal impurities such as sulfur compounds that induce the stacking fault phenomenon to migrate to the surface of the positive electrode active material particles, thereby increasing particle crystallinity and further improving battery characteristics.

By thus performing a mixed coating of sulfur (S) and boron (B) and controlling the coating content, coating conditions, and manufacturing method, the present invention can convert residual lithium such as LiOH and $Li_2CO_3$ present in the particles into substances such as $Li_2BO_3$ and $Li_2SO_4$, and thereby improve capacity, efficiency, and output characteristics.

Meanwhile, when the sulfur (S) and boron (B) coating is performed after the cobalt (Co) coating, more preferably after dry coating, the capacity and cycle life can be improved compared to the case where the cobalt (Co) coating is not performed before the sulfur (S) and boron (B) coating.

A positive electrode according to one aspect of the present invention comprises the said positive electrode active material.

Except for using the above-described positive electrode active material, the positive electrode can have a known structure and can be manufactured according to known manufacturing methods.

The binder, conductive agent, and solvent are not particularly limited as long as they can be used on the positive electrode current collector of a secondary battery.

A secondary battery according to one aspect of the present invention comprises the said positive electrode active material.

The secondary battery may specifically comprise a positive electrode, a negative electrode positioned opposite the positive electrode, and an electrolyte between the positive electrode and the negative electrode, but is not particularly limited as long as it can be used as a secondary battery.

Hereinafter, the Examples of the present invention will be described in more detail.

**Preparation of Positive Electrode Active Material**

**<Example 1>**

(a) Preparation of Precursor An aqueous solution in which $NiSO_4 \cdot 6H_2O$, $CoSO_4 \cdot 7H_2O$, and $MnSO_4 \cdot H_2O$ were mixed in a molar ratio of 91:4.5:4.5, NaOH, and $NH_4OH$ were introduced into a reactor and stirred. The temperature inside the reactor was maintained at 45°C, and the precursor synthesis reaction was carried out while introducing $N_2$ gas into the reactor. After the reaction was completed, it was washed and dewatered to obtain a hydroxide precursor with a composition of $Ni_{0.91}CO_{0.045}Mn_{0.045}(OH)_2$.

(b) First Heat Treatment A mixture was prepared by mixing the hydroxide precursor obtained in step (a) with a lithium raw material, LiOH (Li/Metal molar ratio = 1.00), and $Al(OH)_3$ such that the Al content was 1.0 mol% based on the metal elements excluding lithium in the precursor. Subsequently, a firing furnace in an $O_2$ atmosphere was heated to 760°C over 6 hours, and the mixture was heat-treated for 10 hours, followed by furnace cooling to obtain a primary oxide.

(c) Second Heat Treatment A mixture was prepared by mixing the primary oxide obtained in step (b) with $Co(OH)_2$, weighed such that the Co content was 1.0 mol% based on the metal elements excluding lithium in the primary oxide, and 1.0 mol% of LiOH. Subsequently, a firing furnace in an $O_2$ atmosphere was heated to 700°C over 2 hours, and the mixture was heat-treated for 8 hours, followed by furnace cooling to obtain a secondary oxide.

(d) Third Heat Treatment $H_3BO_3$ was weighed to be 0.235 wt% relative to the secondary oxide obtained in step (c), and then DIW was added to prepare a coating solution with an $H_3BO_3$ concentration of 7.5 wt%. $((NH)_4)_2SO_4$ was weighed to be 0.5 wt% relative to the secondary positive electrode active material and added to the coating solution. The prepared coating solution was sprayed onto the secondary oxide in a specified amount while mixing using a spray method. The mixture was heated in a firing furnace in an $O_2$ atmosphere to 300°C over 1 hour, heat-treated for 8 hours, and then furnace cooled to obtain a positive electrode active material (average particle diameter 14 $\mu$m).

**<Example 2>**

A positive electrode active material was prepared in the same manner as in Example 1, except that in step (d) of Example 1, $((NH_4)_2SO_4$ was weighed to be 0.25 wt% relative to the secondary positive electrode active material and added to the coating solution.

**<Example 3>**

A positive electrode active material was prepared in the same manner as in Example 1, except that in step (d) of Example 1, $((NH_4)_2SO_4$ was weighed to be 0.75 wt% relative to the secondary positive electrode active material and added to the coating solution.

**<Comparative Example 1>**

A positive electrode active material was prepared in the same manner as in Example 1, except that in step (d) of Example 1, $H_3BO_3$ and $((NH_4)_2SO_4$ were not added.

**<Comparative Example 2>**

A positive electrode active material was prepared in the same manner as in Example 1, except that in step (d) of Example 1, $((NH_4)_2SO_4$ was not added to the coating solution.

**<Comparative Example 3>**

A positive electrode active material was prepared in the same manner as in Example 1, except that in step (d) of Example 1, $H_3BO_3$ was not added, and only $((NH_4)_2SO_4$ was added to DIW.

**<Comparative Example 4>**

A positive electrode active material was prepared in the same manner as in Example 1, except that in step (d) of Example 1, $H_3BO_3$ was weighed to be 0.5 wt% relative to the secondary oxide and added.

**<Comparative Example 5>**

A positive electrode active material was prepared in the same manner as in Example 1, except that in step (d) of Example 1, $H_3BO_3$ was weighed to be 1.0 wt% relative to the secondary oxide and added.

**<Comparative Example 6>**

A positive electrode active material was prepared in the same manner as in Example 1, except that in step (d) of Example 1, 0.235 wt% of $H_3BO_3$ and 0.5 wt% of $((NH_4)_2SO_4$ were mixed with the secondary oxide in a dry state and then heat-treated.

**<Comparative Example 7>**

A positive electrode active material was prepared in the same manner as in Example 1, except that in step (d) of Example 1, 0.235 wt% of $H_3BO_3$ was mixed with the secondary oxide in a dry state and then heat-treated.

**Preparation of Lithium Secondary Battery**

For each of the positive electrode active materials prepared according to the Examples and Comparative Examples, 96 wt% of the active material, 2 wt% of artificial graphite, and 2 wt% of PVDF binder were dispersed in 8 g of N-methyl-2-pyrrolidone (NMP) to prepare a positive electrode slurry. The positive electrode slurry was uniformly coated on an aluminum foil with a thickness of 15 $\mu$m and vacuum-dried at 135°C to prepare a positive electrode for a lithium secondary battery. Using the prepared positive electrode, a lithium foil as a counter electrode, a porous polyethylene membrane (Celgard 2300, thickness: 25 μm) as a separator, and an electrolyte solution in which LiPF$_6$ is present at a concentration of 1.15 M in a solvent mixture of ethylene carbonate and ethyl methyl carbonate in a volume ratio of 3:7, a coin cell was manufactured.

**<Experimental Example 1> SEM-EDS**

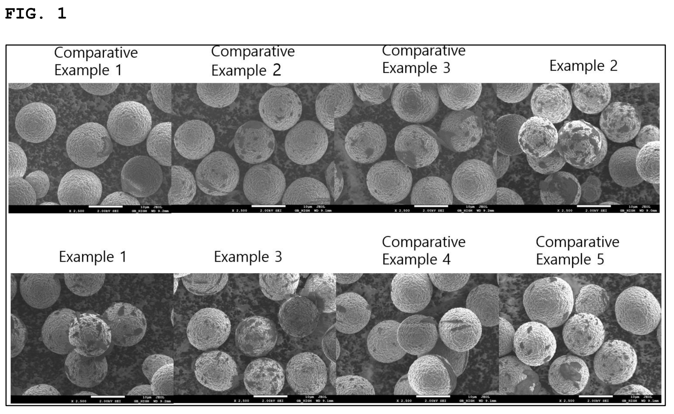

SEM images of the particle surfaces according to the Examples and Comparative Examples are shown in FIG. 1. According to FIG. 1, it can be confirmed that the coating region is applied to only a part of the particle surface.

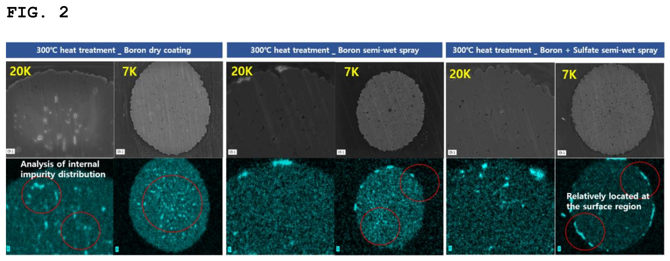

SEM-EDS images of the cross-section of the positive electrode active material particles according to the manufacturing method are shown in FIG. 2. According to FIG. 2, it can be confirmed that when boron (B) and sulfur (S) are coated by semi-wet spray, compared to the case where they are not sprayed and the case where only boron (B) is coated by semi-wet spray, the impurity sulfur (S) originating from the precursor and existing inside the particle relatively migrates to the particle surface to form a coating region.

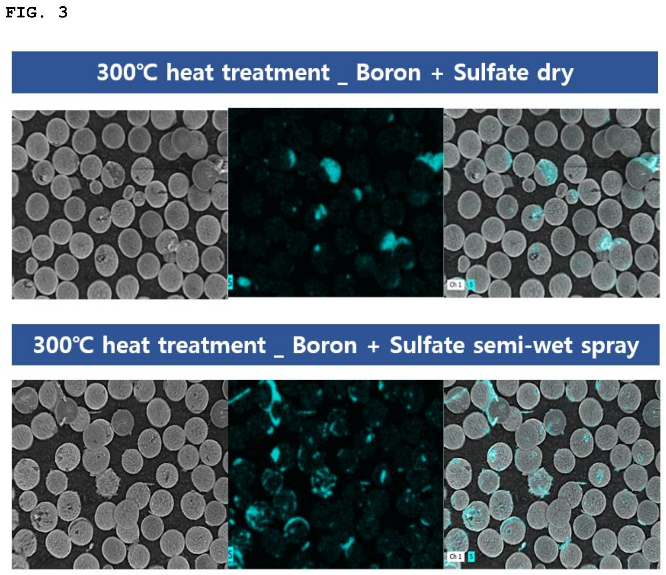

SEM-EDS images of the surface of the positive electrode active material particles according to the manufacturing method are shown in FIG. 3. According to FIG. 3, it can be confirmed that when boron (B) and sulfur (S) are coated by semi-wet spray, compared to the case where boron (B) and sulfur (S) are dry-coated, the impurity sulfur (S) originating from the precursor and existing inside the particle relatively migrates to the particle surface to form a coating region.

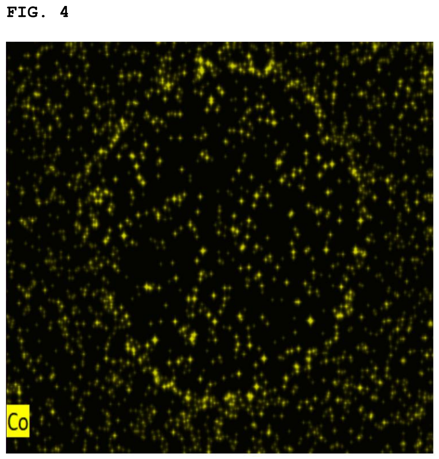

A cross-sectional SEM-EDS image of a particle according to Example 1 of the present invention is shown in FIG. 4. According to FIG. 4, it can be confirmed that a cobalt (Co) coating layer is formed on the particle surface.

**<Experimental Example 2> Residual Lithium Content Analysis**

The results of analyzing the residual lithium content of the positive electrode active materials according to the Examples and Comparative Examples of the present invention are shown in Table 1 below. In the present invention, residual lithium is measured by the amount of 0.1 M HCl used until the pH becomes 4 by pH titration. First, 5 g of oxide is put into 100 ml of DIW, stirred for 15 minutes, and then filtered. Next, 50 ml of the filtered solution is taken, and 0.1 M HCl is added to it to measure the consumption of HCl according to the pH change to determine Q1 and Q2, and the residual LiOH and Li$_2$CO$_3$ were calculated according to the following formulas.

M1 = 23.94 (LiOH Molecular weight)

M2 = 73.89 (Li$_2$CO$_3$ Molecular weight)

$$\text{LiOH(ppm)} = \frac{(Q1-Q2)*M1*HCl\,con.*DIW(g)}{Solution(g)*powder(g)} * 10{,}000$$

$$\text{Li}_2\text{CO}_3\text{(ppm)} = \frac{2*Q2*M2/2*HCl\,con.*DIW(g)}{Solution(g)*powder(g)} * 10{,}000$$

According to Table 1 below, in the case of Examples 1 to 3, where boron (B) and sulfur (S) were added together, it can be confirmed that the residual lithium content decreased compared to Comparative Examples 1 to 3, where this was not the case.

**<Table 1>**

| Residual Lithium | | Comp. Ex. 1 | Comp. Ex. 2 | Comp. Ex. 3 | Example 1 | Example 2 | Example 3 |
|---|---|---|---|---|---|---|---|
| B added (wt%) | | 0 | 0.235 | 0 | 0.235 | 0.235 | 0.235 |
| Sulfate added (wt%) | | 0 | 0 | 0.5 | 0.5 | 0.25 | 0.75 |
| 1st | LiOH | 5,072 | ← | ← | ← | ← | ← |
| Firing | Li$_2$CO$_3$ | 5,457 | ← | ← | ← | ← | ← |
| 2nd | LiOH | 4,864 | ← | ← | ← | ← | ← |
| Firing | Li$_2$CO$_3$ | 5,227 | ← | ← | ← | ← | ← |
| 3rd | LiOH | 3,895 | 2,973 | 3, 027 | 2, 605 | 2,820 | 2, 618 |

(continued)

| Residual Lithium | | Comp. Ex. 1 | Comp. Ex. 2 | Comp. Ex. 3 | Example 1 | Example 2 | Example 3 |
|---|---|---|---|---|---|---|---|
| Firing | $Li_2CO_3$ | 6,079 | 6,180 | 5,833 | 5,119 | 5,886 | 5,561 |
| Total (ppm) | | 9, 974 | 9,153 | 8,860 | 7,724 | 8,706 | 8,179 |

According to Table 1, when both boron (B) and sulfur (S) are coated, it can be confirmed that the residual lithium present in the particles is further reduced compared to the case where neither is coated or only one of boron (B) or sulfur (S) is coated.

<Experimental Example 3> ICP Content Analysis

The results of content analysis according to ICP analysis of the positive electrode active materials according to the Examples and Comparative Examples are shown in Table 2 below. In the present invention, for ICP analysis, a sample solution was prepared by dissolving the positive electrode active material prepared according to the Examples and Comparative Examples in hydrochloric acid, nitric acid, and hydrofluoric acid solvents. Then, the sample solution was diluted 2000 times and introduced into an ICP-OES (Avio 500, PerkinElmer) to measure the weight of each element contained in the positive electrode active material relative to the total weight of the positive electrode active material.

<Table 2>

| | Input $H_3BO_3$ (wt%) | Input B (ppm) | Input $(NH_4)_2SO_4$ (wt%) | Input S (ppm) | Particle S (ppm) | Particle B (ppm) | Particle S/B |
|---|---|---|---|---|---|---|---|
| Comp. Ex. 1 | 0 | 0 | 0 | 0 | 3041 | | |
| Example 1 | 0.235 | 410 | 0.5 | 1213 | 4076 | 339 | 12.0236 |
| Example 2 | 0.235 | 410 | 0.25 | 606.5 | 3369 | 337 | 9.997033 |
| Example 3 | 0.235 | 410 | 0.75 | 1819.5 | 4532 | 301 | 15.05648 |
| Comp. Ex. 4 | 0.5 | 872.34 | 0.5 | 1213 | 4217 | 553 | 7.625678 |
| Comp. Ex. 5 | 1 | 1744.68 | 0.5 | 1213 | 4232 | 1114 | 3.798923 |

<Experimental Example 4> BET Specific Surface Area Analysis

The results of BET specific surface area analysis of the positive electrode active materials according to the Examples and Comparative Examples are shown in Table 3 below. In the present invention, the BET specific surface area was calculated from the amount of nitrogen gas adsorbed at liquid nitrogen temperature (77K) using a gas adsorption specific surface area measurement device (MicrotracBEL, BELSORP-mini II) after pretreating 5 g of the positive electrode active material at 200°C for 3 hours.

<Table 3>

| Classification | BET ($m^2/g$) |
|---|---|
| Comp. Ex. 1 | 0.18 |
| Comp. Ex. 2 | 0.39 |
| Comp. Ex. 3 | 0.48 |
| Example 1 | 0.5 |
| Example 2 | 0.42 |
| Example 3 | 0.44 |
| Comp. Ex. 4 | 0.41 |
| Comp. Ex. 5 | 0.51 |

**<Experimental Example 5> Battery Characteristics Analysis**

The results of battery characteristics analysis for the lithium secondary batteries according to the Examples and Comparative Examples are shown in Table 4 below. In the present invention, the initial charge/discharge capacity was measured using an electrochemical analyzer (Toyo, Toscat-3100) at 25°C, in a voltage range of 2.7V to 4.3V, applying a discharge rate of 0.05C through a charge/discharge experiment to measure the initial charge capacity and initial discharge capacity, and the initial reversible efficiency was calculated. Furthermore, the C-rate was measured using an electrochemical analyzer (Toyo, Toscat-3100) at 25°C, in a voltage range of 2.5V to 4.25V, applying discharge rates from 0.1C to 1.0C through a charge/discharge experiment to measure the output efficiency (C-rate) of 1.0C/0.1C.

<Table 4>

| Classification | Initial Charge Capacity (mAh/g) | Initial Discharge Capacity (mAh/g) | Initial Reversible Efficiency (%) | C-rate (1C/0.1C) (%) |
|---|---|---|---|---|
| Comp. Ex. 1 | 233.6 | 212.7 | 91.00 | 89.10 |
| Comp. Ex. 2 | 239.7 | 222.1 | 92.70 | 88.10 |
| Comp. Ex. 3 | 240.3 | 224.8 | 93.50 | 86.90 |
| Example 1 | 243.2 | 227.6 | 93.60 | 87.90 |
| Example 2 | 241.7 | 225.4 | 93.26 | 87.90 |
| Example 3 | 242.6 | 226.9 | 93.53 | 87.40 |
| Comp. Ex. 4 | 241.1 | 222.6 | 92.30 | 87.00 |
| Comp. Ex. 5 | 241.3 | 223.2 | 92.50 | 87.30 |

According to Table 4, it can be confirmed that in Examples 1 to 3, compared to Comparative Examples 1 to 5, the capacity, efficiency, and C-rate performances are all improved.

**Claims**

1.   A positive electrode active material particle, comprising: sulfur (S) and boron (B), wherein a ratio of a sulfur (S) concentration (ppm) to a boron (B) concentration (ppm) included in the positive electrode active material particle, denoted as S/B, is $8 \leq S/B \leq 20$.

2.   The positive electrode active material particle of claim 1, wherein $10 \leq S/B \leq 15$.

3.   The positive electrode active material particle of claim 1, wherein the boron (B) concentration (ppm) included in the positive electrode active material particle is from 100 ppm to 600 ppm.

4.   The positive electrode active material particle of claim 1, wherein the sulfur (S) concentration (ppm) included in the positive electrode active material particle is from 3,200 ppm to 5,000 ppm.

5.   The positive electrode active material particle of claim 1, wherein the positive electrode active material particle comprises a bulk region and a coating region, the coating region comprises sulfur (S) and boron (B), and the sulfur (S) and boron (B) included in the coating region are present on a part of a surface of the bulk region.

6.   The positive electrode active material particle of claim 5, wherein a sulfur (S) concentration (ppm) included in the coating region is greater than the sulfur (S) concentration (ppm) included in the positive electrode active material particle.

7.   The positive electrode active material particle of claim 1, wherein the positive electrode active material particle comprises $Li_2BO_3$.

8.   The positive electrode active material particle of claim 1, wherein the positive electrode active material particle comprises $Li_2SO_4$.

9. The positive electrode active material particle of claim 1, further comprising a coating oxide comprising one or more selected from the group consisting of cobalt (Co), aluminum (Al), titanium (Ti), zirconium (Zr), magnesium (Mg), zinc (Zn), molybdenum (Mo), iron (Fe), nickel (Ni), barium (Ba), tungsten (W), yttrium (Y), niobium (Nb), and fluorine (F).

10. The positive electrode active material particle of claim 1, wherein a specific surface area measured by a nitrogen adsorption BET method is from 0.42 $m^2/g$ to 0.5 $m^2/g$.

11. A method for manufacturing the positive electrode active material particle of claim 1, the method comprising: a step of mixing and heat-treating a positive electrode active material precursor and a lithium-containing compound to prepare a lithium composite oxide; a step of preparing a coating solution comprising a sulfur (S)-containing compound and a boron (B)-containing compound; and a step of spraying the prepared coating solution onto the prepared lithium composite oxide and heat-treating it.

12. The method for manufacturing a positive electrode active material particle of claim 11, wherein a ratio of a sulfur (S) concentration (ppm) to a boron (B) concentration (ppm) included in the coating solution, denoted as '$S_{input}/B_{input}$', is $1.4 \leq S_{input}/B_{input} \leq 5.0$.

13. The method for manufacturing a positive electrode active material particle of claim 11, wherein a heat treatment temperature in the step of spraying the prepared coating solution onto the prepared lithium composite oxide and heat-treating it is from 250°C to 350°C.

14. The method for manufacturing a positive electrode active material particle of claim 11, further comprising: a step of coating the prepared lithium composite oxide with cobalt (Co), after the step of preparing the lithium composite oxide and before the step of spraying the prepared coating solution onto the prepared lithium composite oxide and heat-treating it.

15. A positive electrode active material, comprising the positive electrode active material particle of claim 1.

FIG. 1

FIG. 2

FIG. 3

FIG. 4

Europäisches
Patentamt

European
Patent Office

Office européen
des brevets

# EUROPEAN SEARCH REPORT

**Application Number**

EP 25 21 0463

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 863 607 A (GEELY HOLDING GROUP CO LTD ET AL.) 28 March 2023 (2023-03-28) | 1,5,7 | INV. C01G53/50 |
| Y | * example 1 * | 1-15 | |
| X | EP 4 195 321 A1 (SK ON CO LTD [KR]) 14 June 2023 (2023-06-14) | 1,5,7 | |
| Y | * example 1 * | 1-15 | |
| Y | JP 2001 250535 A (YUASA BATTERY CO LTD) 14 September 2001 (2001-09-14) * paragraph [[0046]] - paragraph [[0047]] * | 1-15 | |
| X | CN 117 239 103 B (ZHEJIANG POWER NEW ENERGY CO LTD) 23 February 2024 (2024-02-23) | 1,5,7 | |
| Y | * example 3 * | 1-15 | |

**TECHNICAL FIELDS SEARCHED (IPC)**

C01G

The present search report has been drawn up for all claims

| Place of search | Date of completion of the search | Examiner |
|---|---|---|
| Munich | 27 March 2026 | Timmermans, Michel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...................................................................................
& : member of the same patent family, corresponding
document

EPO FORM 1503 03.82 (P4C01)

## ANNEX TO THE EUROPEAN SEARCH REPORT
## ON EUROPEAN PATENT APPLICATION NO.

EP 25 21 0463

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2026

| Patent document cited in search report | | Publication date | Patent family member(s) | | Publication date |
|---|---|---|---|---|---|
| CN 115863607 | A | 28-03-2023 | NONE | | |
| EP 4195321 | A1 | 14-06-2023 | CN | 116259728 A | 13-06-2023 |
| | | | EP | 4195321 A1 | 14-06-2023 |
| | | | KR | 20230087148 A | 16-06-2023 |
| | | | US | 2023187620 A1 | 15-06-2023 |
| JP 2001250535 | A | 14-09-2001 | JP | 3327468 B2 | 24-09-2002 |
| | | | JP | 2001250535 A | 14-09-2001 |
| CN 117239103 | B | 23-02-2024 | NONE | | |

EPO FORM P0459

For more details about this annex : see Official Journal of the European Patent Office, No. 12/82